# EUROPÄISCHE PATENTSCHRIFT

(11) **EP 2 233 815 B1**
(45) Veröffentlichungstag und Bekanntmachung des Hinweises auf die Patenterteilung: **07.08.2013**
(21) Anmeldenummer: 10168892.7
(22) Anmeldetag: 23.08.2006
(51) Int. Cl.: F16L 37/098

(54) **Steckverbinder für Medienleitungen**
Quick-acting connector
Raccord rapide

(30) Priorität: 10.10.2005 DE 202005015966 U
(43) Veröffentlichungstag der Anmeldung: 29.09.2010
(62) Teilanmeldung aus: 06778328.2
(73) Patentinhaber: Voss Automotive GmbH, 51688 Wipperfürth (DE)
(72) Erfinder: Isenburg, Marco, 40885 Ratingen (DE); Zenses, Frank, 50354 Hürth (DE); Lechner, Martin, 51789 Lindlar (DE)
(74) Vertreter: Patentanwälte Dr. Solf & Zapf

(56) Entgegenhaltungen:
- EP-A1- 0 999 398
- DE-A1- 3 710 853
- DE-A1- 10 047 872
- US-A- 4 927 185
- US-A- 5 024 468
- US-A- 5 806 898
- US-A- 5 988 706
- US-A1- 2003 132 631
- US-A1- 2004 036 282

## Beschreibung

Die vorliegende Erfindung betrifft einen Steckverbinder für Medienleitungen (Rohr- oder Schlauchleitungen für hydraulische oder pneumatische Strömungsmedien), insbesondere für Kraftstoffleitungen, nach dem Oberbegriff des Anspruchs 1.

Die DE 298 24 260 U1 bzw. die korrespondierende EP 0 999 398 B1 beschreibt einen Steckverbinder, bei dem das Steckerteil als Rastmittel zwei einstückig angeformte Rastarme aufweist. Die Rastarme erstrecken sich auf einander diametral gegenüberliegenden Seiten des Steckerteils mit ihren freien, radial elastisch beweglichen Enden jeweils etwa parallel zur Steckachse in die der Einsteckrichtung entgegengesetzte Richtung, d. h. in Löserichtung. Beim Einstecken greifen die Rastarme mit radialen Rastansätzen in korrespondierende Rastkonturen innerhalb der Aufnahmeöffnung des Verbindergegenstückes ein, wobei jeweils ein endseitiger Betätigungsabschnitt aus der Aufnahmeöffnung nach außen ragt, um damit manuell die Rastarme zum Lösen der Verrastung radial nach innen bewegen zu können. Dabei ist eine Schutzkappe beschrieben, die zur Schmutzabdichtung von außen über den Einsteckbereich aufsteckbar ist. Zudem wird durch die Schutzkappe auch ein ungewolltes Lösen des Steckerteils vermieden, weil vor einer Lösebetätigung der Rastarme zunächst die Schutzkappe entfernt werden muß, weil sonst die Rastarme bzw. deren Betätigungsabschnitte nicht zugänglich sind. Diese bekannte Ausführung erfordert relativ viel Bauraum, und die Schutzkappe unterliegt als separates Teil einer nicht unerheblichen Verlustgefahr.

Die US 5 988 706 A beschreibt ein Rohr, welches mit einem Ende in ein Aufnahmeteil einsteckbar ist. Zur Halterung des Rohres weist dieses einen gestauchten radialen Ringwulst auf, gegen den ein auf dem Rohr sitzendes, aus Blech bestehendes Halteelement wirkt, Dieses Halteelement besteht aus einem das Rohr umschließenden Ringteil und zwei diametral gegenüberliegenden federelastischen Rastarmen, die eine Stufe innerhalb des Aufnahmeteils hintergreifen. Zur Sicherung gegen Lösen ist zusätzlich als Verriegelungselement ein weiterer, hohlzylindrischer Ring verschiebbar auf dem Rohr angeordnet. Dieser Ring kann axial in den Bereich des Halteelementes geschoben werden, muss aber zur Montage axial auf das Rohr aufgeschoben werden, bevor das Rohrende mit dem Ringwulst versehen wird.

Eine sehr ähnliche Ausführung ist in der US 5 806 898 A beschrieben, wobei zur Sicherung ein Profilringkörper vorgesehen ist.

Die DE 37 10 853 A1 beschreibt eine Steckverbindung für ein Rohr. Dabei hat ein Aufnahmeteil einen zylindrischen Ringraum, in den das Rohr und eine dieses umgebende Fixierhülse aus Kunststoff einführbar ist. Zum Verriegeln von Fixierzungen ist eine Kappe auf das Rohr aufgesetzt, die mit einem Spreizkegel zwischen das Rohr und die Fixierzungen eingreift.

Schließlich beschreibt die US 2003/0132631 A1 eine weitere Rohrverbindung mit einem hülsenförmigen Halteelement und einem kappenartigen, aus einem elastischen Material bestehenden Sicherungselement. Dieses Sicherungselement ist speziell so ausgebildet, so dass es auf einen winkligen Bereich des Rohrs aufsetzbar ist.

Der vorliegenden Erfindung liegt die Aufgabe zugrunde, einen Steckverbinder der eingangs genannten Art zu schaffen, der sich durch eine besonders kompakte Bauform, eine gute Handhabung mit geringem Raumbedarf für eine manuelle Lösebetätigung sowie durch einfache Herstellbarkeit und Montage auszeichnet

Erfindungsgemäß wird dies durch die Merkmale des Anspruchs 1 erreicht. Vorteilhafte Ausgestaltungen sind Gegenstand der abhängigen Ansprüche sowie der nachfolgenden Beschreibung.

Der erfindungsgemäße Steckverbinder hat durch seine Ausgestaltung, insbesondere durch die Anordnung und Wirkverbindung des Verriegelungselementes mit dem Steckerteil, eine sehr kompakte Form und gewährleistet bei guter Handhabung eine hohe Sicherheit gegen ungewolltes Lösen, wobei zudem das Verriegelungselement auf einfache Weise durch radiales Aufrasten montiert sowie durch sein radiales Betätigungselement einfach manuell bedient werden kann.

Anhand mehrerer in der Zeichnung veranschaulichter Ausführungsbeispiele soll die Erfindung mit einigen bevorzugten Varianten des Verriegelungselementes genauer erläutert werden. Dabei zeigen:
- Fig. 1: eine Perspektivansicht einer ersten Ausführungsform eines erfindungsgemäßen Steckverbinders mit Verriegelungselement in Sicherungsstellung,
- Fig. 2: eine Explosionsansicht mit entfernt dargestellten Verriegelungselement,
- Fig. 3: eine Seitenansicht des Verbinders ohne Verriegelungselement,
- Fig. 4: eine Seitenansicht in Pfeilrichtung IV gemäß Fig. 3,
- Fig. 5 u. 6: Ansichten analog zu Fig. 3 und 4 des gesamten, mit dem Verriegelungselement verbundenen Steckverbinders nach Fig. 1,
- Fig. 7: eine Dreiansichten-Darstellung des Verriegelungselementes der ersten Ausführungsform nach Fig. 1 bis 6,
- Fig. 8a und 8b: zwei Ansichten analog zu Fig. 5 und 6 in einer Ausführungsvariante und mit zusätzlicher, zur Hälfte geschnittener Darstellung eines Verbindergegenstückes, jedoch ohne Verriegelungselement,
- Fig. 9 bis 13: Darstellungen einer zweiten Ausführungsform des erfindungsgemäßen Steckverbinders analog zu Fig. 1 bis 7,
- Fig. 14 bis 18: weitere Darstellungen einer dritten Ausführungsform analog zu Fig. 9 bis 13, jedoch mit einem anderen, nicht erfindungsgemäßen Verriegelungselement,
- Fig. 19 bis 23: eine vierte Ausführungsform in Darstellungen analog zu Fig. 14 bis 18, ebenfalls mit einem nicht erfindungsgemäßen Verriegelungselement,
- Fig. 24 bis 28: weitere analoge Darstellungen einer fünften, gegenüber Fig. 19 bis 23 geringfügig modifizierten Ausführung.
- Fig. 29 bis 36: Darstellungen einer weiteren, bevorzugten Ausführungsform der Erfindung, und zwar:

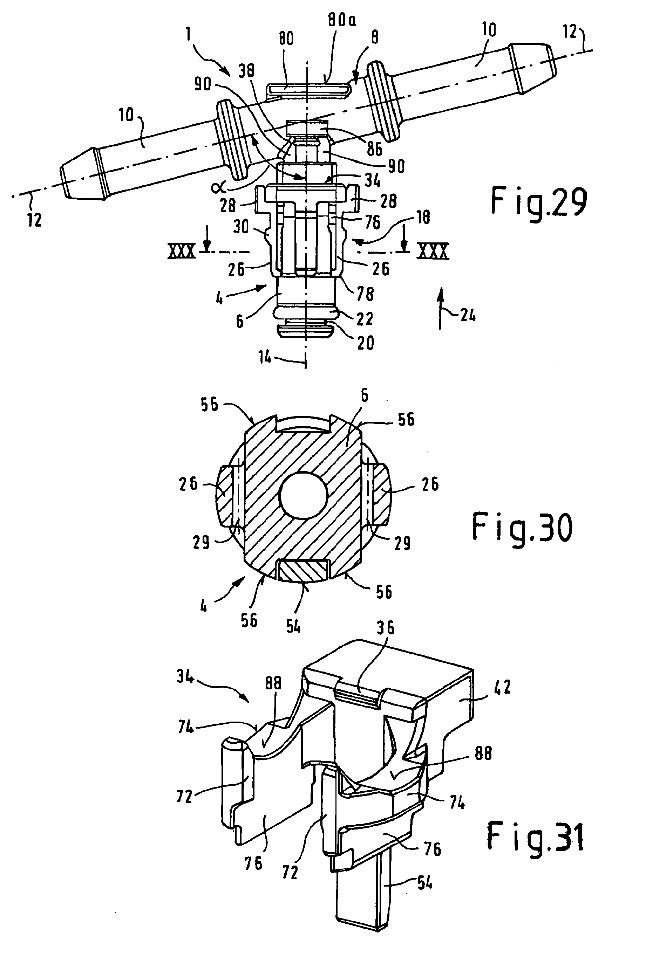

- Fig. 29: eine Seitenansicht des Steckerteils in der Sicherungsstellung des erfindungsgemäßen Verriegelungselementes,
- Fig. 30: einen vergrößerten Querschnitt in der Schnittebene XXX-XXX gemäß Fig. 29,
- Fig. 31: eine gesonderte und stark vergrößerte Perspektivansicht des Verriegelungselementes,

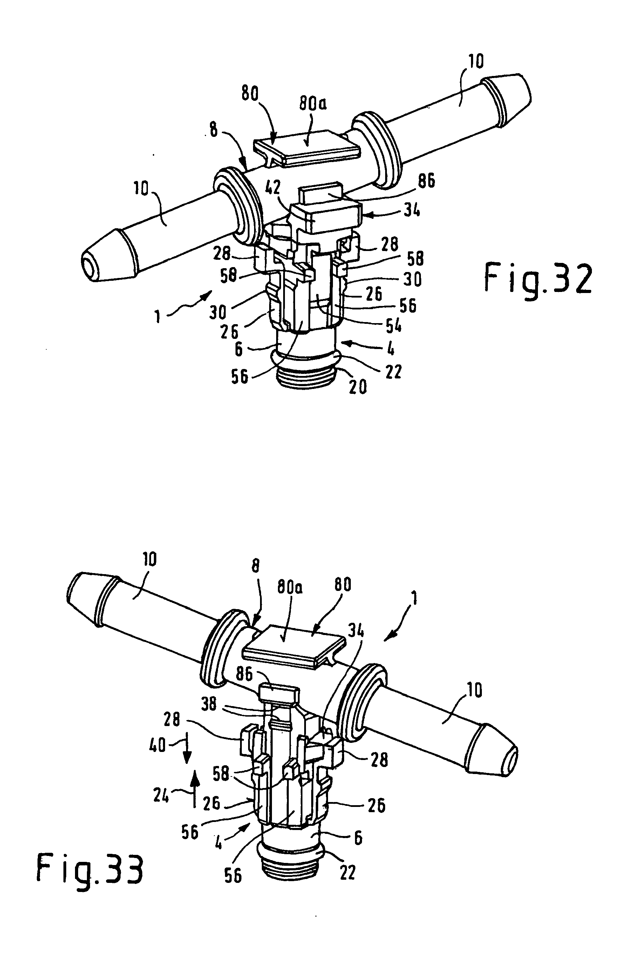

- Fig. 32: eine Perspektivansicht des Steckerteils nach Fig. 29, jedoch in der Lösestellung des Verriegelungselementes,
- Fig. 33: eine weitere Perspektivansicht auf die der Ansicht nach Fig. 32 diametral gegenüberliegende Seite, jedoch in der Sicherungsstellung nach Fig. 29,

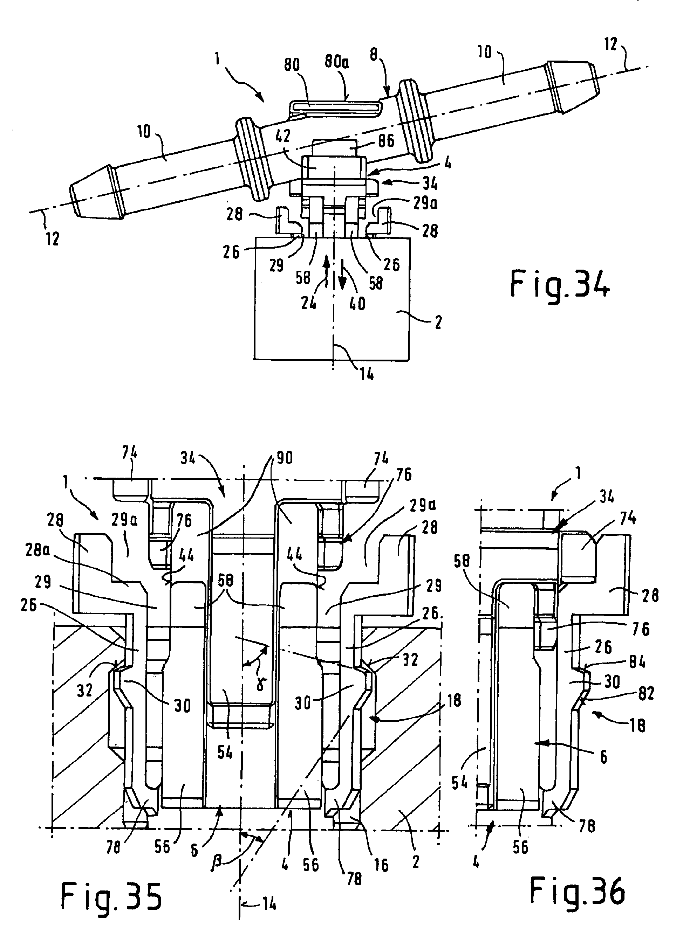

- Fig. 34: eine Seitenansicht des Steckerteils wie in Fig. 29, jedoch in einem in ein Verbindergegenstück eingesteckten Zustand und in der Lösestellung des Verriegelungselementes,
- Fig. 35: eine vergrößerte Teilansicht aus Fig. 34 mit axialgeschnittenem Verbindergegenstück und
- Fig. 36: einen Ausschnitt aus Fig. 35 in der Sicherungsstellung des Verriegelungselementes.

In den verschiedenen Figuren der Zeichnung sind gleiche Teile stets mit den gleichen Bezugszeichen versehen.

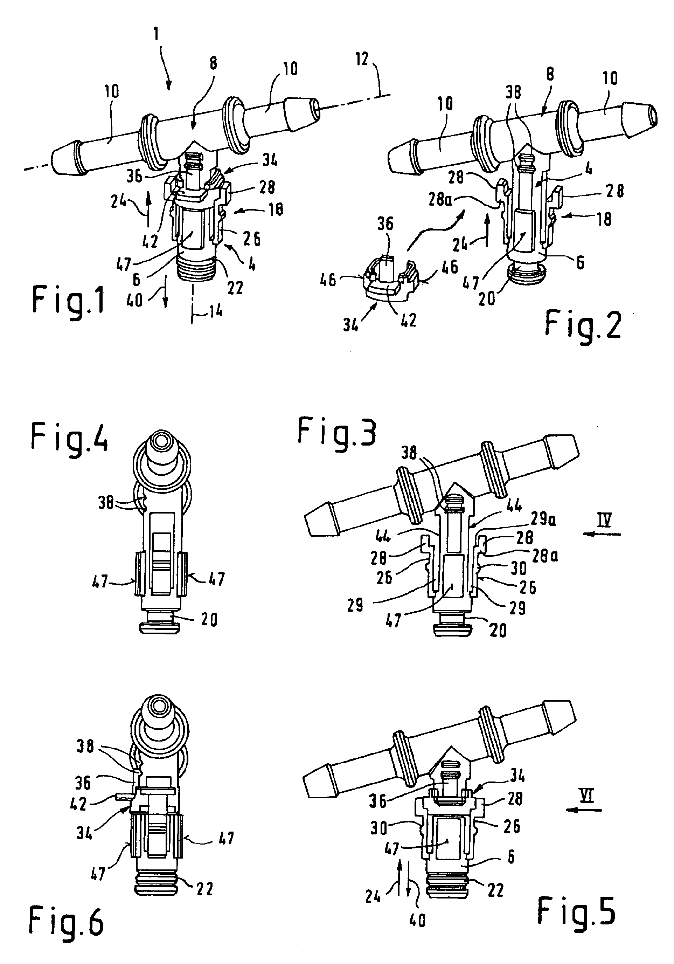

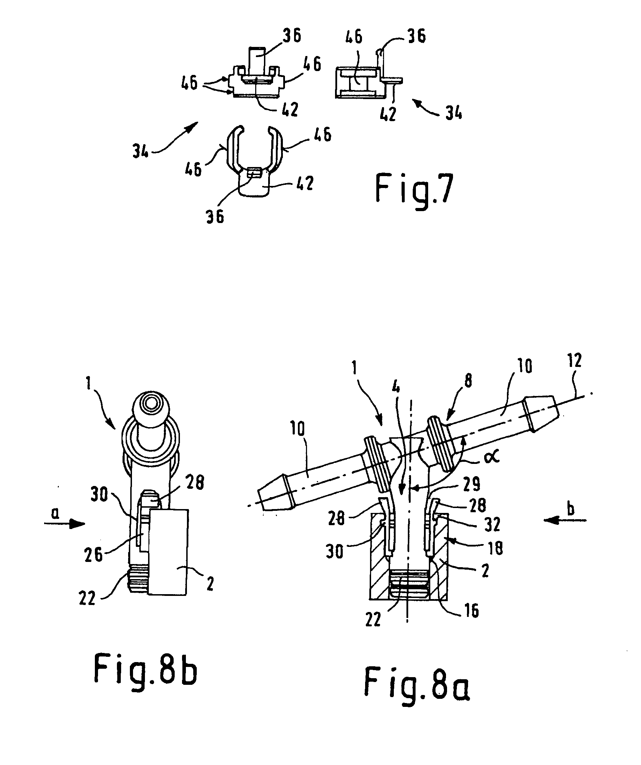

Ein erfindungsgemäßer Steckverbinder 1 dient zum schnellen und lösbaren, steckbaren und verrastbaren Anschluss mindestens einer nicht dargestellten Medienleitung an einem Verbindergegenstück 2 (siehe Fig. 8, 14, 17, 34 und 35). Der Steckverbinder 1 besteht aus einem Steckerteil bzw. Steckabschnitt 4 in Form eines Steckerschaftes 6 und einem Leitungsanschlussabschnitt 8 mit mindestens einem Leitungsabgang 10. In den dargestellten Ausführungen ist der Steckverbinder 1 als T-Verbinder ausgebildet, wobei sich zwei Leitungsabgänge 10 gleichachsig, d. h. entsprechend einer gemeinsamen Leitungsachse 12, in entgegengesetzte Richtungen erstrecken. Es können aber auch zwei oder mehr Leitungsabgänge 10 mit unterschiedlichen Leitungsachsen vorhanden sein. Der Steckerschaft 6 definiert eine Steckachse 14, wobei sich die Leitungsachse 12 quer zur Steckachse 14 erstreckt. Dabei können - wie bei den dargestellten bevorzugten Ausführungen (vgl. z. B. Fig. 8 und 29) - die Steckachse 14 und die Leitungsachse 12 einen Winkel α ≠ 90° einschließen. Eine Ausführung mit α = 90° ist aber auch möglich. Zudem kann optional auch nur ein quer zur Steckachse 14 ausgerichteter Leitungsabgang 10 vorhanden sein. Ferner kann zumindest bei den Ausführungen gemäß Fig. 1 bis 8 und 14 bis 18 auch (nur) ein dem Steckerschaft 6 gegenüberliegender Leitungsabgang in Richtung der Steckachse 14 ausgerichtet sein (nicht dargestellt). Die Leitungsabgänge 10 können als Stutzen zum Aufstecken jeweils einer nicht dargestellten Leitung ausgebildet sein.

Gemäß Fig. 8, 14, 17, 34 und 35 ist der Steckerschaft 6 dichtend in eine Aufnahmeöffnung 16 des Verbindergegenstückes 2 einsteckbar und über Rastmittel 18 lösbar gegen Herausziehen arretierbar. Für die Abdichtung trägt der Steckerschaft 6 in einer Ringnut 20 zumindest einen Dichtring 22.

Die Rastmittel 18 bestehen bevorzugt aus zwei einander diametral gegenüberliegenden, sich zur Steckachse 14 etwa parallel in Löserichtung (Pfeil 24) erstreckenden, in radialer Richtung federelastisch beweglichen Rastarmen 26, die einendig einstückig mit dem Steckerschaft 6 verbunden sind. Alternativ kann aber bereits ein einzelner Rastarm 26 ausreichen, und zwar vor allem bei Anwendungen des Steckverbinders 1 für drucklose Medien oder bei Unterdruck. Es können aber auch mehr als zwei (z. B. drei) Rastarme 26 in einer bevorzugt radialsymmetrischen Umfangsverteilung vorgesehen sein. An ihren gegenüberliegenden freien, in Löserichtung 24 weisenden Enden weisen die Rastarme 26 Endabschnitte 28 auf, die im gesteckten Zustand (siehe z. B. Fig. 8 und 35) außerhalb des Verbindergegenstückes 2 vorstehen. Vorzugsweise ist jeder Endabschnitt 28 über einen radialen Stegabschnitt 28a so mit dem zugehörigen Rastarm 26 verbunden, dass ein zwischen dem Steckerschaft 6 und dem Rastarm 26 gebildeter radialer Spalt 29 in einen radial vergrößerten Spaltbereich 29a zwischen den Steckerschaft 6 und dem Endabschnitt 28 übergeht (siehe insbesondere die Figuren 3, 11, 16, 21, 26 und 35). Im eingesteckten Zustand hintergreifen die Rastarme 26 mit radialen Rastansätzen 30 eine innerhalb der Aufnahmeöffnung 16 des Verbindergegenstückes 2 vorhandene Raststufe 32 formschlüssig oder zumindest kraftformschlüssig (siehe insbesondere Fig. 35). Zum Lösen dieser Verrastung können die Rastarme 26 mittels der vorstehenden Endabschnitte 28 manuell radial nach innen bewegt werden, um eine formschlüssige Verrastung zu lösen. Im Falle einer kraftformschlüssigen Verrastung über zur Steckachse 14 abgeschrägte Flächen - siehe Fig. 35 - kann der Steckerschaft 6 auch einfach rastend aus der Aufnahmeöffnung 16 herausgezogen werden. Dabei können die Rastmittel 18 auch derart mit unterschiedlichen Schrägflächen gestaltet sein, dass in Einsteck- und Löserichtung unterschiedliche Kräfte zu überwinden sind. Vorzugsweise soll das Einstecken leichter als das Lösen sein, umgekehrt ist aber auch möglich. Dies wird weiter unten für die Ausführung nach Fig. 29 bis 36 anhand der Fig. 35 noch genauer beschrieben.

Der Steckverbinder 1 ist zweckmäßig mit seinen Bestandteilen, d.h. mit dem Steckabschnitt 4, mit den Rastarmen 26 und bevorzugt auch mit dem Leitungsanschlussabschnitt 8 als einstückiges, monolithisches Formteil insbesondere aus Kunststoff ausgebildet.

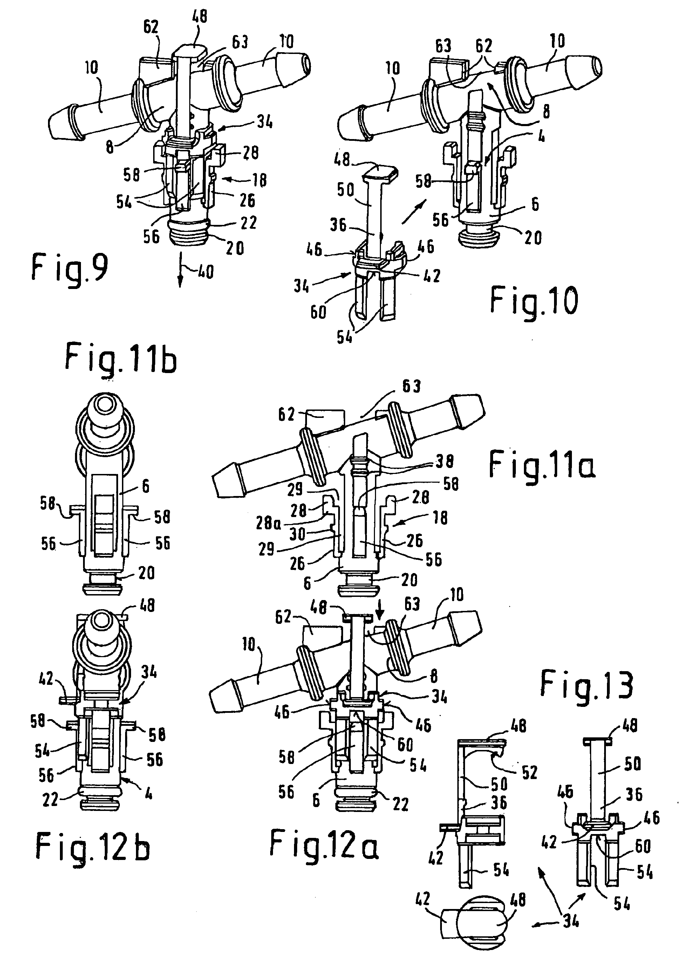

Erfindungsgemäß ist mit dem Steckerteil 4 ein Verriegelungselement 34 form- oder kraftformschlüssig und dadurch weitgehend unverlierbar sowie derart zwischen einer Lösestellung und einer Sicherungsstellung beweglich verbunden, dass es in der Sicherungsstellung - vgl. beispielsweise Fig. 1, 5 und 6 sowie Fig. 29, 33 und 36 - die Rastmittel 18 gegen Lösen blockiert und in der Lösestellung - vgl. Fig. 9 und 12 sowie Fig. 32, 34 und 35 - für eine die Arretierung aufhebende Lösebewegung freigibt. Vorzugsweise ist das Verriegelungselement 34 derart in axialer Richtung beweglich (verschiebbar) am Steckerteil 4 gehalten, dass es in der Sicherungstellung so radial in den Spaltbereich 29a und bevorzugt auch teilweise in den Spalt 29 zwischen den Rastarmen 26 und dem Steckerschaft 6 eingreift, dass dadurch die Rastarme 26 gegen eine radial nach innen gerichtete Lösebewegung blockiert sind. In der Lösestellung liegt das Verriegelungselement 34 derart axial außerhalb (oberhalb) des Spaltbereichs 29, 29a der Rastarme 26 und deren Endabschnitte 28, dass die Rastarme 26 für ihre radiale Lösebewegung freigegeben werden. Zweckmäßig ist dabei das Verriegelungselement 34 in jeder der beiden Stellungen insbesondere kraftformschlüssig rastend relativ zum Steckerteil 4 fixiert.

Im Folgenden werden unterschiedliche Ausführungsvarianten des Verriegelungselementes 34 erläutert.

In der ersten Ausführung gemäß Fig. 1 bis 7 ist das Verriegelungselement 34 in Draufsicht und in Umfangsrichtung des Steckerschaftes 6 gesehen etwa C-förmig und vorzugsweise aus Kunststoff ausgebildet, so dass es radial auf den Steckerschaft 6 aufschiebbar ist und dort den Steckerschaft 6 umgreift und dadurch selbsthaltend und axial beweglich geführt ist. Dem Öffnungsbereich des C-förmigen Verriegelungselementes 34 diametral gegenüberliegend ist ein Rastelement 36 in Form eines sich axial in Löserichtung 24 erstreckenden Rastarmes vorgesehen. Dieses Rastelement 36 wirkt mit zwei axial beabstandeten Rastnuten 38 am Steckerschaft 6 derart zusammen, dass das Verriegelungselement 34 jeweils in der Sicherungsstellung und in der Lösestellung rastend fixiert ist. In Einsteckrichtung (Pfeil 40) unterhalb des Rastelementes 36 ist ein Betätigungselement 42 mit bevorzugt rechteckiger Form angeordnet. Mit diesem laschenartigen, etwa radial vorstehenden Betätigungselement 42 kann manuell oder mit einem geeigneten Werkzeug eine Kraft zur Axialbewegung des Verriegelungselementes 34 ausgeübt werden. Dabei wird das Verriegelungselement 34 auf Führungsflächen 44 (Fig. 3) des Steckerschaftes 6 verschiebbar geführt. In der Sicherungsstellung blockiert das Verriegelungselement 34 mit Sperrflächen 46 die Rastarme 26 gegen eine Öffnungsbewegung radial nach innen in Richtung der Steckachse 14, indem gemäß Fig. 5 das Verriegelungselement 34 mit den Sperrflächen 46 in den erweiterten Spaltbereich 29a und einen angrenzenden Teilabschnitt des Spaltes 29 eingreift. Bei dieser ersten Ausführung weist der Steckerschaft 6 radial vorspringende Stützflächen 47 zur kippsicheren Abstützung in der Aufnahmeöffnung 16 auf.

In der zweiten Ausführung gemäß Fig. 9 bis 13 entspricht das Verriegelungselement 34 zunächst weitgehend der ersten Ausführung gemäß Fig. 1 bis 7; es weist aber zusätzliche Elemente auf. So ist an dem eigentlichen C-förmigen Verriegelungselement 34 ein Betätigungsabschnitt 48 in Form eines Tasters angeordnet, der über eine axiale Verlängerung 50 des Rastelementes 36 mit diesem verbunden ist. Der tastenartige Betätigungsabschnitt 48 weist eine rechtwinklig zur Steckachse 14 ausgerichtete Oberfläche auf und ist insgesamt oberhalb des gesamten Steckverbinders 1 angeordnet. Hierzu wird insbesondere auf Fig. 9 und 12 verwiesen. Durch einen an der Unterseite des Betätigungsabschnittes 48 gebildet und an die Außenkontur des Steckverbinders 1 angepassten Steg 52 (Fig. 13) wird vermieden, dass durch eine Druckkraftbeaufschlagung auf den Betätigungsabschnitt 48 eine zu große Biegung der Verlängerung 50 und des Rastelementes 36 entsteht und dadurch die axiale Bewegung des Verriegelungselementes womöglich behindert wird. Zusätzlich weist das Verriegelungselement 34 zwei Führungsstege 54 auf, die sich an der unteren Seite axial in Einsteckrichtung 40 parallel zueinander erstrecken. Diese Führungsstege 54 erhöhen die Kippsicherheit des Verriegelungselementes 34. Bei dieser Ausführungsform sind am Steckerschaft 6 zwei zusätzliche Führungsansätze 56 gebildet, die um jeweils 90° versetzt zwischen den Rastarmen 26 und somit einander diametral gegenüberliegend angeordnet sind. Die dadurch entstehenden Zwischenräume zwischen den Rastarmen 26 und den Führungsansätzen 56 wirken als nutartige Führungen für die Führungstege 54 des Verriegelungselementes 34. Die Führungsstege 54 und die Führungsansätze 56 weisen radial äußere Umfangsflächen auf, die gemeinsam auf einer gedachten zylindrischen Fläche mit einem derart an den Innendurchmesser der Aufnahmeöffnung 16 angepassten Außendurchmesser liegen, dass die zur kippfreien Führung des gesamten Steckerschaftes 6 in der Aufnahmeöffnung 16 dienen. In den in Löserichtung 24 weisenden Endbereichen der Führungsansätze 56 ist jeweils ein Ansatznocken 58 angeordnet, auf denen sich das Verriegelungselement 34 in der Sicherungsstellung abstützt. Dabei greift jeweils der Anschlagnocken 58 in eine korrespondierende Ausnehmung 60 des C-förmigen Verriegelungselementes 34 ein. Weiterhin kann bei dieser zweiten Ausführungsform zur Verriegelungskontrolle an der Oberseite des Steckverbinders 1 ein sich in Längsrichtung der Leitungsachse 12 erstreckender Stegansatz 62 angeordnet sein, der eine Unterbrechung 63 zur Aufnahme des Betätigungsabschnittes 48 aufweist. Hierbei ist die Ausgestaltung derart, dass in der Sicherungsstellung des Verriegelungselementes 34 der Betätigungsabschnitt 48 mit seiner ebenen Oberfläche und der Stegansatz 62 mit seiner oberen Begrenzungskante im Wesentlichen in einer gemeinsamen Ebene liegen. Somit kann die korrekte Sicherungsstellung des Verriegelungselementes 34 leicht erkannt, d. h. gesehen und auch ertastet werden. Diese Ausführung dient somit als Steckindikator.

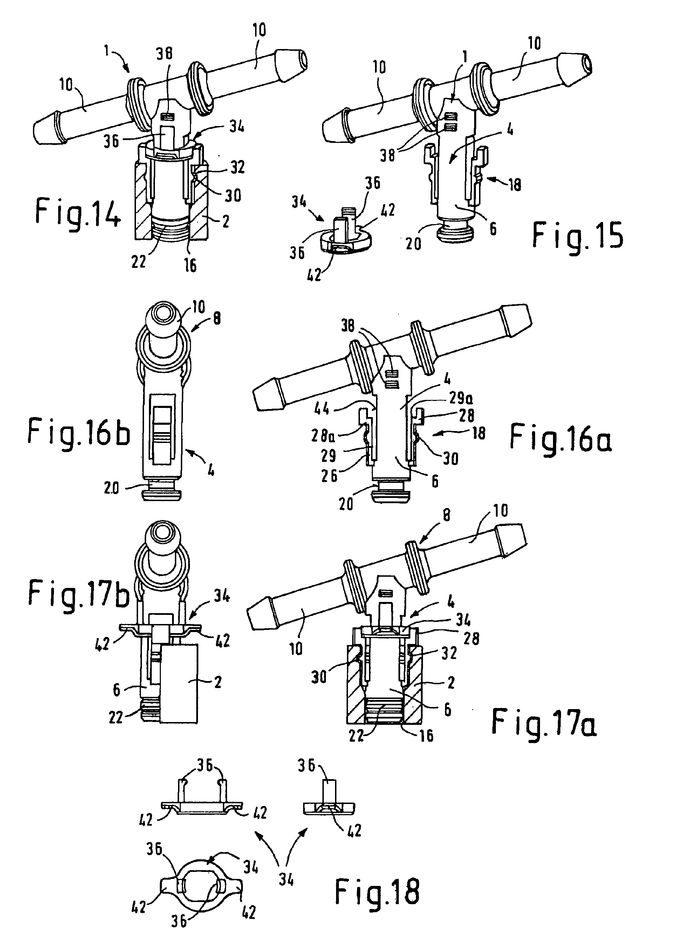

In der dritten Ausführungsform gemäß Fig. 14 bis 18 ist das nicht erfindungsgemäße Verriegelungselement 34 ringförmig ausgebildet, und es weist mehrere (zwei) Rastelemente 36 zur Positionierung und mehrere (zwei) ansatzförmige Betätigungselemente 42 auf. Trotz der separaten Darstellung in Fig. 15 sitzt dieses ringförmige Verriegelungselement 34 unlösbar auf dem Steckerschaft 6, siehe Fig. 14 und 17. Das Verriegelungselement 34 kann in einem besonderen Verfahren auf den Steckerschaft 6 diesen umschließend aufgespritzt werden, indem die Teile aus verschiedenen, sich nicht stoffschlüssig verbindenden Kunststoffmaterialien bestehen.

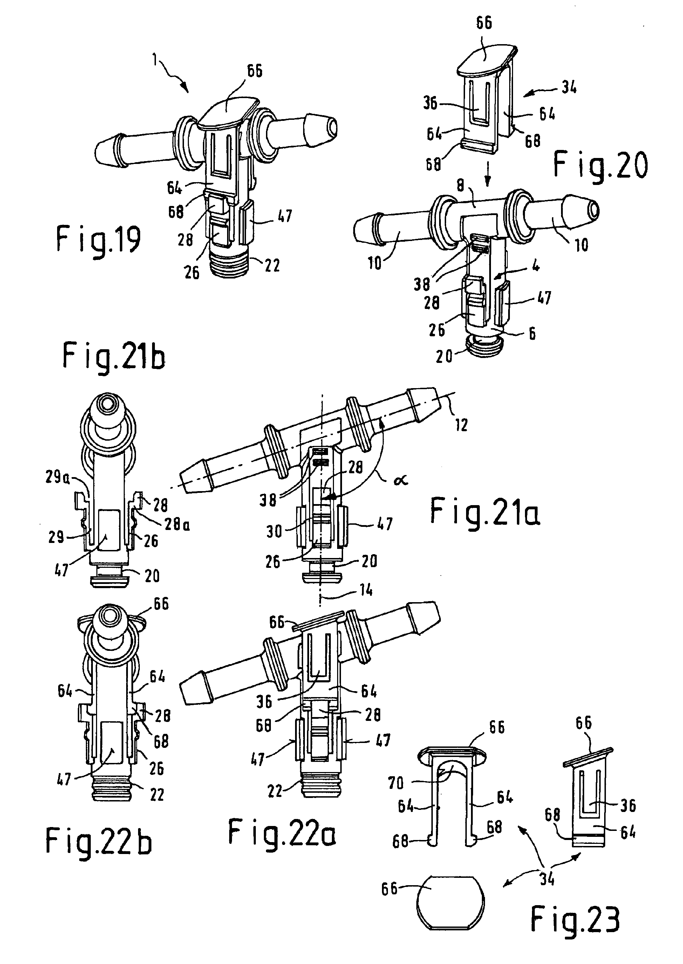

In der vierten Ausführung gemäß Fig. 19 bis 23 ist das nicht erfindungsgemäße Verriegelungselement 34 als umgekehrt U-förmiger Schieber ausgebildet, der von oben über den gesamten Steckverbinder 1 aufgeschoben wird. Dabei übergreift das Verriegelungselement 34 den Steckverbinder 1 mit zwei Verriegelungsstegen 64 und ist axial zwischen Lösestellung und Sicherungstellung bewegbar. In seinem die Verriegelungsstege 64 verbindenden Bereich ist ein tastenartiges Betätigungselement 66 gebildet. Die Verriegelungsstege 64 weisen an ihren freien, in Einsteckrichtung weisenden Enden Verriegelungsnocken 68 auf, die in der Sicherungsstellung 7 in den Bereich der Endabschnitte 28 der Rastarme 26 und in die Spaltbereiche 29a eingreifen und so die Rastarme 26 blockieren (siehe Fig. 19 und 22). Im Bereich der Verriegelungsstege 64 sind durch U-förmige Aussparungen die Rastelemente 36 gebildet, die mit den Rastnuten 38 am Steckerschaft 6 zur Positionierung des Verriegelungselementes 34 in seinen beiden Stellungen zusammenwirken. Die Innenkontur 70 auf der Unterseite des Betätigungselementes 66 (siehe Fig. 23) ist an die obere Kontur des Steckverbinders derart angepaßt, dass im Zusammenwirken der Konturen eine Bauraumeinsparung erreicht wird. Die Innenkontur 70 und die Gegenkontur des Steckverbinders sind durch ihre Geometrie (beispielsweise Radien und/oder Ausklinkungen) derart aneinander angepasst, dass im gesteckten und verriegelten Zustand nahezu alle Hohlräume ausgefüllt sind. Bei der Ausführung gemäß Fig. 19 bis 23 weist das tastenartige Betätigungselement 66 eine obere Fläche auf, die entsprechend dem zur Steckachse 14 schrägen Verlauf der Leitungsachse 12 parallel zu dieser ausgerichtet ist (Fig. 22).

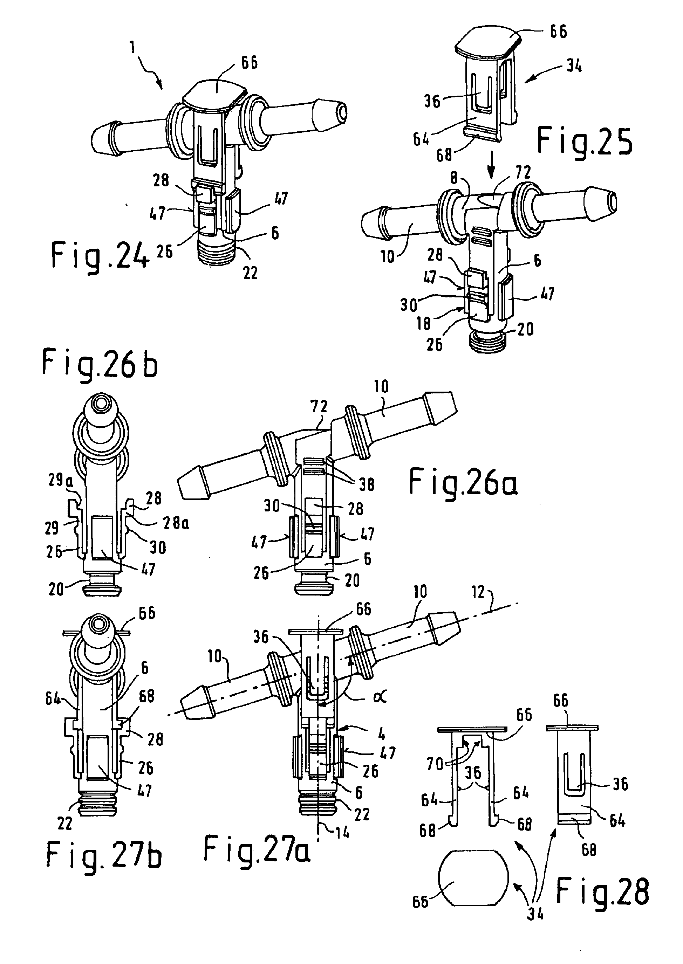

Die Ausführungsvariante gemäß Fig. 24 bis 28 unterscheidet sich davon dadurch, dass die Oberfläche des Betätigungselementes 66 rechtwinklig zur Steckache 14 ausgerichtet ist (Fig. 27). Dazu weist gemäß Fig. 26 der Steckverbinder 1 eine Ausnehmung mit einer entsprechenden Gegenfläche 72 auf. Im Übrigen entspricht diese Ausführung gemäß Fig. 24 bis 28 der vierten nicht erfindungsgemäßen Ausführung gemäß Fig. 19 bis 23.

Die in mancher Hinsicht besonders vorteilhafte Ausführungsform gemäß Fig. 29 bis 36 entspricht zunächst hinsichtlich zahlreicher Merkmale den Ausführungen gemäß Fig. 1 bis 7 bzw. Fig. 9 bis 13. Dabei ist der Steckverbinder 1 bzw. der Steckabschnitt 4 mit dem Steckerschaft 6 bevorzugt derart - bezogen auf die Steckachse 14 - radialsymmetrisch ausgebildet, dass das im Wesentlichen C-förmige Verriegelungselement 34 wahlweise auf beiden diametral gegenüberliegenden Seiten durch radiales Aufstecken montierbar ist. Dies bedeutet, dass alle mit dem Verriegelungselement 34 zusammenwirkenden Bestandteile mehrfach und radialsymmetrisch zueinander vorgesehen sind (vgl. hierzu z. B. Fig. 30, 32 und 33).

Im Folgenden sollen spezielle Unterschiede und Besonderheiten der Ausführung nach Fig. 29 bis 36 gegenüber den Figuren 1 bis 7 bzw. 9 bis 13 erläutert werden.

Das Verriegelungselement 34 weist nur einen axialen Führungssteg 54 auf, während der Steckerschaft 6 auf beiden diametral gegenüberliegenden Seiten je zwei rippenförmige Führungsansätze 56 aufweist. Dabei greift der Führungssteg 54 des Verriegelungselementes 34 zwischen die Führungsansätze 56 des Steckerschaftes 6. Gemäß Fig. 30 liegen die äußeren, im Querschnitt kreisbogenförmig gekrümmten Umfangsflächen des Führungssteges 54 und der Führungsansätze 56 auf einer gedachten Zylinderfläche, deren Durchmesser an den Innendurchmesser der Aufnahmeöffnung 16 des Verbindergegenstückes 2 so angepasst ist, dass eine gute, kippfreie Führung des gesamten Steckverbinders 1 in der Aufnahmeöffnung 16 gewährleistet ist. Diese Führung wird bevorzugt noch dadurch unterstützt, dass auch die Außenflächen der Rastarme 26 gemäß Fig. 30 im Querschnitt kreisbogenförmig gekrümmt sind und auf der gleichen gedachten Zylinderfläche liegen.

Gemäß Fig. 31 ist bei dieser Ausführung des Verriegelungselementes 34 das im Zusammenwirken mit den Rastnuten 38 die beiden Axialstellungen fixierende Rastelement 36 durch einen rippenartigen Vorsprung direkt am Innenumfang des C-förmigen Verriegelungselementes 34 bzw. des Betätigungselementes 42 gebildet. Dabei ist das Betätigungselement 42 vorteilhafterweise durch eine vergrößerte Dicke mechanisch verstärkt ausgebildet, was für eine Betätigung mittels eines Werkzeugs, beispielsweise mittels eines Schraubendrehers, vorteilhaft ist. An den freien Enden der Öffnungsseiten der C-Form weist das Verriegelungselement 34 nach innen aufeinanderzu weisende Rastelemente 72 auf, mit denen das Verriegelungselement 34 den Steckerschaft 6 zur Halterung rastend umgreift.

Weiterhin weist das Verriegelungselement 34 erste Riegelabschnitte 74 zum Eingriff in die erweiterten Spaltbereiche 29a zwischen Steckerschaft 6 und den Endabschnitten 28 der Rastarme 26 sowie axial verlängerte zweite Riegelabschnitte 76 auf, die in der Sicherungsstellung relativ weit axial in den Spalt 29 eingreifen; siehe hierzu insbesondere Fig. 36, wonach sich die zweiten Riegelabschnitte 76 axial bis kurz vor den Bereich der Rastansätze 30 erstrecken. In der unverriegelten Lösestellung (Fig. 35) bilden die Rastarme 26 eine Art "Kragarme", die frei radial elastisch beweglich sind. Dabei ist von Vorteil, wenn jeder Rastarm 26 über einen radialen Verbindungsabschnitt 78 einstückig mit dem Steckerschaft 6 verbunden ist und dabei jeder Verbindungsabschnitt 78 eine Wandstärke aufweist, die etwa der Wandstärke bzw. der radialen Dicke des Rastarms 26 entspricht. Dadurch wirkt der Verbindungsabschnitt 78 ähnlich wie ein Filmscharnier, was zu einer geringen Radialkraft zur radialen Bewegung der Rastarme 26 führt. Dennoch ist in der Sicherungsstellung (Fig. 36) eine hohe Stabilität gegen Lösen gewährleistet, indem jeder Rastarm 26 beidendig, d. h. beidseitig des Rastansatzes 30, radial spielfrei eingespannt ist.

In weiterer vorteilhafter Ausgestaltung weist der Steckverbinder 1 auf der dem Steckabschnitt 4 gegenüberliegenden (oberen) Seite des Leitungsanschlussabschnittes 8 ein insbesondere platten- oder scheibenförmiges Druckelement 80 mit einer ebenen, quer, insbesondere rechtwinklig zur Steckachse 14 ausgerichteten Oberfläche 80a auf. Vorzugsweise ist das Druckelement 80 so angeordnet, dass die Steckachse 14 mittig durch das Druckelement 80 bzw. dessen Oberfläche 80a verläuft. Über das Druckelement 80 kann eine Steckkraft optimal manuell eingeleitet werden. Zudem kann das Druckelement 80 auch als Träger für eine Markierung oder Kennzeichnung dienen.

Wie weiter oben bereits erwähnt wurde, ist bevorzugt die zum Einstecken aufzubringende Steckkraft kleiner als die zum Herausziehen notwendige Lösekraft. Konstruktiv weist dazu der Rastansatz 30 jedes Rastarmes 26 bevorzugt eine erste, in Einsteckrichtung (Pfeil 40 in Fig. 34) weisende Schrägfläche 82 sowie eine gegenüberliegende zweite, in Löserichtung (Pfeil 24 in Fig. 34) weisende Schrägfläche 84 auf (siehe Fig. 36). Wie in Fig. 35 eingezeichnet ist, schließen dabei die ersten Schrägflächen 82 mit der Steckachse 14 einen spitzen, relativ kleinen (flachen) Winkel β ein, während der Winkel γ zwischen den zweiten Schrägflächen 84 und der Steckachse 14 größer ist. Im dargestellten Beispiel betragen der Winkel β ca. 25° bis 35°, insbesondere etwa 30°, und der Winkel γ etwa 70° bis 80°. Dabei ist bevorzugt auch die Raststufe 32 innerhalb des Verbindergegenstückes 2 als Schrägfläche derart ausgebildet, dass in der Lösestellung des Verriegelungselementes 34 der Steckverbinder 1 durch einfaches Herausziehen kraftformschlüssig lösbar ist, indem über die jeweiligen Schrägflächen die Rastansätze 30 radial nach innen bewegt werden.

Es ist weiterhin vorteilhaft, wenn der Steckverbinder 1 im Übergangsbereich von Steckabschnitt 4 und Leitungsanschlussabschnitt 8 ein (bzw. auf jeder Diametralseite je ein) Anschlagelement 86 aufweist, an dem das Verriegelungselement 34 in seiner oberen Lösestellung axial zur Anlage gelangt. Das Anschlagelement 86 bildet somit einen Endanschlag zur Begrenzung der Bewegung des Verriegelungselementes 34 in Löserichtung nach oben. Dadurch kann vorteilhafterweise eine Lösekraft auch z. B. mittels eines hebelartigen Werkzeugs (Schraubendreher) über das Verriegelungsselement 34 in den Steckverbinder 1 eingeleitet werden.

Zur Begrenzung der Axialbewegung des Verriegelungselementes 34 in Einsteckrichtung nach unten in der Sicherungsstellung (siehe insbesondere Fig. 36) weist der Steckverbinder 1 am Steckerschaft 6 - wiederum bevorzugt symmetrisch auf beiden Diametralseiten - je zwei Anschlagnocken 58 auf, die gemäß Fig. 34 vorteilhafterweise gleichzeitig auch als Anschläge zur Einsteckbegrenzung des Steckerschaftes 6 durch Auflage auf dem Verbindergegenstück 2 dienen. Hierbei sind die Anschlagnocken 58 bevorzugt derart dimensioniert, dass in der Steckposition gemäß Fig. 34 die Rastarme 26 im Bereich der Rastansätze 30 axial kraftfrei sind (vgl. dazu auch Fig. 35, wonach die Rastansätze 30 von der Raststufe 32 geringfügig axial beabstandet sind). Dies ist vor allem im Falle eines Medien-Unterdrucks von besonderem Vorteil.

Um eine besonders kompakte Bauform mit möglichst geringer, axial über das Verbindergegenstück 2 vorstehender Höhe zu erreichen, ist die Oberseite des Verriegelungselements 34 so an die an den Steckabschnitt 4 angrenzende Unterseite des Leitungsanschlussabschnittes 8 bzw. der Leitungsabgänge 10 angepasst, dass das Verriegelungselement 34 in seiner Lösestellung bereichsweise den Leitungsanschlussabschnitt 8 aufnimmt bzw. umschließt. Konkret wird dies dadurch erreicht, dass gemäß Fig. 31 das Verriegelungselement 34 auf seiner Oberseite konkave Vertiefungen 88 als Negativkontur in Anpassung an die kreisförmige Querschnittskontur des Leitungsanschlussabschnittes 8 bzw. der Leitungsabgänge 10 aufweist. Zumindest eine dieser Vertiefungen 88 (bei Schrägstellung des Leitungsanschlussabschnittes 8, vgl. den Winkel α in Fig. 29) schmiegt sich in der Lösestellung eng an den Leitungsanschlussabschnitt 8 an (siehe Fig. 32 und 34).

Um ein einfaches radiales Aufsetzen bzw. Aufrasten des Verriegelungselementes 34 auf den Steckerschaft 6 zu ermöglichen, weist der Steckerschaft 6 zweckmäßig auf seinem Umfang derart im Querschnitt z. B. schräg oder kreisbogenförmig geformte Führungsflächen 90 auf (siehe Fig. 29 und 35), dass beim radialen Aufsetzen die freien Abschnitte des C-förmigen Verriegelungselementes 34 mit den Rastelementen 72 zur Auflage auf den Führungsflächen 90 gelangen und dadurch elastisch gespreizt werden, bis letztlich die Rastelemente 72 den Steckerschaft 6 kraftformschlüssig rastend umgreifen.

Abschließend sei noch bemerkt, dass der erfindungsgemäße Steckverbinder durch die erfindungsgemäße Ausgestaltung mit einer sehr kleinen Raumform herstellbar ist. Beispielsweise kann er für einen Innendurchmesser der Aufnahmeöffnung 16 in der Größenordnung von etwa 8mm ausgelegt sein. Dabei weist der Steckerschaft 6 eine Einstecklänge von etwa 12mm auf, gemessen vom freien Einsteckende bis zu den Auflageflächen der Anschlagnocken 58.

Eine bevorzugte Verwendung des Steckverbinders ist zum Anschluß mindestens einer Kraftstoff-Rückfluss- bzw. Leckageöl-Leitung in einem Kraftstoff-Einspritzsystem eines Verbrennungsmotors, insbesondere in einem sogenannten Common-Rail-System eines Dieselmotors. Bei solchen Motoren wird aufgrund der steigenden Leistungsdichte der für Steckverbindungen zur Verfügung stehende Bauraum im Injektorbereich des Zylinderkopfes immer kleiner. Durch die mögliche, sehr kleine Bauform, insbesondere Einstecklänge, des erfindungsgemäßen Steckverbinders ist dieser auch für solche Anwendungen bestens geeignet.

Die Erfindung ist nicht auf die dargestellten und beschriebenen Ausführungsbeispiele beschränkt, sondern umfasst auch alle im Sinne der Erfindung gleichwirkenden Ausführungen. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Steckverbinder (1) für Medienleitungen, bestehend aus einem Steckerteil (4), das mit einem Steckerschaft (6) dichtend in eine Aufnahmeöffnung (16) eines Verbindergegenstückes (2) einsteckbar und über Rastmittel (18) lösbar gegen Herausziehen arretierbar ist, wobei ein Verriegelungselement (34) derart beweglich mit dem Steckerteil (4) verbunden ist, dass es in einer Sicherungsstellung die Rastmittel (18) gegen Lösen blockiert und in einer Lösestellung für eine die Arretierung aufhebende Lösebewegung freigibt,
**dadurch gekennzeichnet, dass** das Verriegelungselement (34) derart im Wesentlichen C-förmig ausgebildet ist, dass es in radialer Richtung auf den Steckerschaft (6) aufsetzbar und dadurch selbsthaltend und axial beweglich geführt ist, wobei das Verriegelungselement (34) ein laschenartiges Betätigungselement (42) aufweist, und wobei das Verriegelungselement (34) in der Sicherungsstellung und in der Lösestellung jeweils kraftformschlüssig rastend relativ zum Steckerteil (4) fixiert ist, wozu das Verriegelungselement (34) ein Rastelement (36) aufweist, welches mit jeweils einer von zwei axial beabstandeten Rastnuten (38) am Steckerschaft (6) zusammenwirkt.

2. Steckverbinder nach Anspruch 1,
**dadurch gekennzeichnet, dass** das Verriegelungselement (34) an freien Enden von Offnungsseiten seiner C-Form nach innen aufeinander zu weisende Rastelemente (72) aufweist, mit denen das Verriegelungselement (34) den Steckerschaft (6) zur Halterung rastend umgreift.

3. Steckverbinder nach Anspruch 1 oder 2,
**dadurch gekennzeichnet, dass** die Rastmittel (18) aus einer Anzahl von einem bis mindestens drei, insbesondere zwei einander diametral gegenüberliegenden Rastarmen (26) des Steckerteils (4) bestehen, die sich zur Steckachse (14) etwa parallel in Löserichtung (24) erstrecken und in radialer Richtung federelastisch ausgebildet sind, wobei die Rastarme (26) ausgelegt sind, um im eingesteckten Zustand jeweils eine innerhalb der Aufnahmeöffnung (16) des Verbindergegenstückes (2) vorhandene Raststufe (32) form- oder kraftformschlüssig rastend zu hintergreifen.

4. Steckverbinder nach Anspruch 3,
**dadurch gekennzeichnet, dass** das Verriegelungselement (34) derart in axialer Richtung beweglich am Steckerteil (4) gehalten ist, dass es in der Sicherungsstellung die Rastarme (26) gegen eine radial nach innen gerichtete Lösebewegung blockiert und in der Lösestellung für eine solche Lösebewegung freigibt.

5. Steckverbinder nach einem der Ansprüche 1 bis 4,
**dadurch gekennzeichnet, dass** das Steckerteil (4) mit einem Leitungsanschlussabschnitt (8) einstückig verbunden ist, wobei der Leitungsanschlussabschnitt (8) mindestens einen Leitungsabgang (10) mit einer Leitungsachse (12) aufweist, die zu einer Steckachse (14) des Steckerschaftes (6) quer oder gleichachsig ausgerichtet ist.

6. Steckverbinder nach einem der Ansprüche 1 bis 5,
**dadurch gekennzeichnet, dass** das Steckerteil (4) bezüglich seiner mit dem Verriegelungselement (34) zusammenwirkenden Außenkontur derart radialsymmetrisch ausgebildet ist, dass das Verriegelungselement (34) wahlweise in verschiedenen Relativstellungen mit dem Steckerteil (4) verbindbar ist.

7. Steckverbinder nach einem der Ansprüche 1 bis 6,
**dadurch gekennzeichnet, dass** das Verriegelungselement (34) mindestens einen axialen Führungssteg (54) sowie der Steckerschaft (6) mindestens einen axialen, stegartigen Führungsansatz (56) derart aufweisen, dass eine kippfreie Führung einerseits des Verriegelungselementes (34) auf dem Steckerschaft (6) und andererseits des Steckerschaftes (6) in der Aufnahmeöffnung (16) gewährleistet ist.

8. Steckverbinder nach Anspruch 7,
**dadurch gekennzeichnet, dass** der/jeder Führungssteg (54), der/jeder Führungsansatz (56) sowie bevorzugt auch der/jeder Rastarm (26) äußere Führungsflächen in Anpassung an die kreisförmige Innenquerschnittskontur der Aufnahmeöffnung (16) aufweisen.

9. Steckverbinder nach einem der Ansprüche 1 bis 8,
**dadurch gekennzeichnet, dass** das Verriegelungselement (34) in seiner Lösestellung und/oder in seiner Sicherungsstellung axial an einem/jeweils einem Endanschlag zur Anlage gelangt.

10. Steckverbinder nach einem der Ansprüche 5 bis 9,
**dadurch gekennzeichnet, dass** der Leitungsanschlussabschnitt (8) auf seiner dem Steckerschaft (6) gegenüberliegenden Seite ein plattenartiges Druckelement (80) mit einer quer, insbesondere senkrecht zur Steckachse (14) ausgerichteten Oberfläche (80a) aufweist.

11. Steckverbinder nach einem der Ansprüche 3 bis 10,
**dadurch gekennzeichnet, dass** das Verriegelungselement (34) in der Sicherungsstellung mit Riegelabschnitten (74, 76) derart in Spalte (29, 29a) zwischen dem Steckerschaft (6) und jedem Rastarm (26) eingreift, dass jeder Rastarm (26) in seinem freien Endbereich radial spielfrei fixiert ist.

12. Steckverbinder nach einem der Ansprüche 3 bis 11,
**dadurch gekennzeichnet, dass** das Steckerteil (4) äußere Anschlagelemente (58) zur Einsteckbegrenzung durch Auflage auf dem Verbindergegenstück (2) aufweist, wobei vorzugsweise in der Auflagestellung die Rastarme (26) axial kraftfrei sind.

13. Steckverbinder nach einem der Ansprüche 1 bis 12,
**dadurch gekennzeichnet, dass** das Verriegelungselement (34) auf seiner dem Leitungsanschlussabschnitt (8) zugewandten Seite eine an die angrenzenden Kontur des Leitungsanschlussabschnittes (8) angepasste Negativkontur aufweist.

## Claims

1. A plug-in connector (1) for media lines, consisting of a plug part (4) which can be inserted with a plug shank (6) in sealing manner into a receiving opening (16) of a connector counter-piece (2) and can be detachably fixed against being pulled out via latch means (18), wherein a locking element (34) is connected in movable manner to the plug part (4) such that in a securing position it blocks the latch means (18) against detachment and in a detachment position releases them for a detachment movement which cancels out the fixing,
**characterised in that** the locking element (34) is formed substantially C-shaped such that it can be placed on the plug shank (6) in the radial direction and is thereby guided in self-retaining and axially movable manner, the locking element (34) having a tab-like actuating element (42), and the locking element (34) in the securing position and in the detachment position is fastened by latching in each case in force-locked and form-locked manner relative to the plug part (4), for which purpose the locking element (34) has a latch element (36) which cooperates with in each case one of two axially spaced-apart latch grooves (38) on the plug shank (6).

2. A plug-in connector according to Claim 1, **characterised in that** the locking element (34) on free ends of opening sides of its C-shape has latch elements (72) facing inwards towards each other, with which the locking element (34) surrounds the plug shank (6) in latching manner for holding it.

3. A plug-in connector according to Claim 1 or 2, **characterised in that** the latch means (18) consist of a number from one to at least three, in particular two, latch arms (26) of the plug part (4) which are located diametrically opposed to one another, which extend approximately parallel to the axis of insertion (14) in the detachment direction (24) and are made to be resilient in the radial direction, the latch arms (26) being designed in order, in the inserted state, in each case to engage in a form-locked or force-locked and form-locked manner by latching behind a latch step (32) present within the receiving opening (16) of the connector counter-piece (2).

4. A plug-in connector according to Claim 3, **characterised in that** the locking element (34) is held movably in the axial direction on the plug part (4) such that in the securing position it blocks the latch arms (26) against a detachment movement directed radially inwards and in the detachment position releases it for such a detachment movement.

5. A plug-in connector according to one of Claims 1 to 4, **characterised in that** the plug part (4) is connected in one piece to a line connection section (8), the line connection section (8) having at least one line outlet (10) with a line axis (12) which is oriented transversely or coaxially to an axis of insertion (14) of the plug shank (6).

6. A plug-in connector according to one of Claims 1 to 5, **characterised in that** the plug part (4) with respect to its external contour which cooperates with the locking element (34) is formed radially symmetrically such that the locking element (34) can be connected as desired in various relative positions to the plug part (4).

7. A plug-in connector according to one of Claims 1 to 6, **characterised in that** the locking element (34) has at least one axial guide bar (54) and the plug shank (6) at least one axial, bar-like guide projection (56) such that tilt-free guidance on one hand of the locking element (34) on the plug shank (6) and on the other hand of the plug shank (6) in the receiving opening (16) is ensured.

8. A plug-in connector according to Claim 7, **characterised in that** the/each guide bar (54), the/each guide projection (56) and preferably also the/each latch arm (26) have outer guide surfaces, adapting to the circular internal cross-sectional contour of the receiving opening (16).

9. A plug-in connector according to one of Claims 1 to 8, **characterised in that** the locking element (34) in its detachment position and/or in its securing position comes to bear axially on a/in each case one end stop.

10. A plug-in connector according to one of Claims 5 to 9, **characterised in that** the line connection section (8) has on its side located opposite the plug shank (6) a plate-like pressure element (80) with a surface (80a) oriented transversely, in particular perpendicular, to the axis of insertion (14).

11. A plug-in connector according to one of Claims 3 to 10, **characterised in that** the locking element (34) in the securing position engages using bolt sections (74, 76) in gaps (29, 29a) between the plug shank (6) and each latch arm (26) such that each latch arm (26) is fixed radially free from play in its free end region.

12. A plug-in connector according to one of Claims 3 to 11, **characterised in that** the plug part (4) has outer stop elements (58) for limiting insertion by lying on the connector counter-piece (2), with preferably the latch arms (26) being axially free from force in the contact position.

13. A plug-in connector according to one of Claims 1 to 12, **characterised in that** the locking element (34) on its side facing the line connection section (8) has a negative contour matched to the adjoining contour of the line connection section (8).

## Revendications

1. Raccord à emboîtement (1) pour conduites de fluides, constitué d'une partie d'insertion (4), laquelle peut être insérée avec une tige d'insertion (6) de manière étanche dans un orifice de réception (16) d'une pièce antagoniste de raccordement (2) et qui peut être bloquée de manière amovible afin d'empêcher toute sortie par l'intermédiaire de moyens d'arrêt (18), un élément de verrouillage (34) étant relié à la partie d'insertion (4) de manière mobile, de telle manière qu'il bloque, pour empêcher toute libération, les moyens d'arrêt (18) dans une position de sécurité et procède au déblocage dans une position de libération pour un mouvement de libération supprimant le blocage,
**caractérisé en ce que** l'élément de verrouillage (34) est réalisé essentiellement de manière à présenter en forme en C de telle manière qu'il peut être posé sur la tige d'insertion (6) dans le sens radial de manière ainsi à être guidé de manière mobile axialement et de manière à être auto-maintenu, l'élément de verrouillage (34) présentant un élément d'actionnement (42) se présentant sous la forme d'une éclisse et l'élément de verrouillage (34) étant fixé dans la position de sécurité et dans la position de libération respectivement à force de manière encliquetable par rapport à la partie d'insertion (4), ce pour quoi l'élément de verrouillage (34) présente un élément d'arrêt (36), qui coopère avec respectivement une des deux rainures d'arrêt (38) tenues à distance axialement au niveau de la tige d'insertion (6).

2. Raccord à emboîtement selon la revendication 1,
**caractérisé en ce que** l'élément de verrouillage (34) présente au niveau des extrémités libres des côtés d'ouverture de sa forme en C des éléments d'arrêt (72) orientés les uns vers les autres vers l'intérieur, à l'aide desquels l'élément de verrouillage (34) saisit par encliquetage la tige d'insertion (6) aux fins de la fixation.

3. Raccord à emboîtement selon la revendication 1 ou 2,
**caractérisé en ce que** les moyens d'arrêt (18) se composent d'un nombre de bras d'arrêt (26) de la partie d'insertion (4) allant de un à au moins trois, en particulier deux, lesquels se font face diamétralement, s'étendent à peu près parallèlement à l'axe d'insertion (14) dans le sens de libération (24) et présentent une élasticité dans le sens radial, les bras d'arrêt (26) étant configurés pour s'engager de manière encliquetable par complémentarité de forme ou à force, à l'état enfiché, respectivement derrière un étage d'arrêt (32) présent à l'intérieur de l'orifice de réception (16) de la pièce antagoniste de raccordement (2).

4. Raccord à emboîtement selon la revendication 3,
**caractérisé en ce que** l'élément de verrouillage (34) est maintenu de manière mobile dans le sens axial sur la tige d'insertion (4) de telle sorte qu'il bloque dans la position de sécurité les bras d'arrêt (26) contre un mouvement de libération dirigé radialement vers l'intérieur et les libère dans la position de libération pour un tel mouvement de libération.

5. Raccord à emboîtement selon l'une quelconque des revendications 1 à 4,
**caractérisé en ce que** la partie d'insertion (4) est reliée d'un seul tenant à une section de raccordement de conduite (8), la section de raccordement de conduite (8) présentant au moins une sortie de conduite (10) dotée d'un axe de conduite (12), qui est orienté de manière transversale ou sur le même axe par rapport à un axe d'insertion (14) de la tige d'insertion (6).

6. Raccord à emboîtement selon l'une quelconque des revendications 1 à 5,
**caractérisé en ce que** la partie d'insertion (4) est réalisée par rapport à son contour extérieur coopérant avec l'élément de verrouillage (34) de manière radialement symétrique de telle manière que l'élément de verrouillage (34) peut être relié au choix dans diverses positions relatives à la partie d'insertion (4).

7. Raccord à emboîtement selon l'une quelconque des revendications 1 à 6,
**caractérisé en ce que** l'élément de verrouillage (34) présente au moins une entretoise de guidage (54) axiale, et **en ce que** la tige d'insertion (6) présente au moins une saillie de guidage (56) axiale à la manière d'une entretoise, de telle manière qu'un guidage n'autorisant pas de basculement d'une part de l'élément de verrouillage (34) sur la tige d'insertion (6) et d'autre part de la tige d'insertion (6) dans l'orifice de réception (16), est permis.

8. Raccord à emboîtement selon la revendication 7,
**caractérisé en ce que** l'entretoise de guidage/chaque entretoise de guidage (54), la saillie de guidage/chaque saillie de guidage (56) ainsi que de manière préférée le bras d'arrêt/chaque bras d'arrêt (26) présentent des surfaces de guidage extérieures s'adaptant au contour de section transversale intérieur en forme de cercle de l'orifice de réception (16).

9. Raccord à emboîtement selon l'une quelconque des revendications 1 à 8,
**caractérisé en ce que** l'élément de verrouillage (34) dans sa position de libération et/ou dans sa position de sécurité vient respectivement axialement en appui contre une butée d'extrémité.

10. Raccord à emboîtement selon l'une quelconque des revendications 5 à 9,
**caractérisé en ce que** la section de raccordement de conduite (8) présente sur son côté faisant face à la tige d'insertion (6) un élément de pression (80) en forme de plaque doté d'une surface (80a) orientée de manière transversale, en particulier de manière perpendiculaire par rapport à l'axe d'insertion (14).

11. Raccord à emboîtement selon l'une quelconque des revendications 3 à 10,
**caractérisé en ce que** l'élément de verrouillage (34) vient en prise dans la position de sécurité avec des sections de verrou (74, 76) de telle manière dans des fentes (29, 29a) entre la tige d'insertion (6) et chaque bras d'arrêt (26) que chaque bras d'arrêt (26) est fixé, dans sa zone d'extrémité libre, sans jeu de manière radiale.

12. Raccord à emboîtement selon l'une quelconque des revendications 3 à 11,
**caractérisé en ce que** la partie d'insertion (4) présente des éléments de butée (58) extérieurs servant à limiter l'insertion par pression sur la pièce antagoniste de raccordement (2), les bras d'arrêt (26) étant exempts de force axialement de préférence dans la position d'appui.

13. Raccord à emboîtement selon l'une quelconque des revendications 1 à 12,
**caractérisé en ce que** l'élément de verrouillage (34) présente sur son côté tourné vers la section de raccordement de conduite (8) un contour négatif adapté au contour adjacent de la section de raccordement de conduite (8).
